# EUROPEAN PATENT APPLICATION

(11) **EP 4 365 916 A1**
(43) Date of publication of application: **08.05.2024**
(21) Application number: 22833040.3
(22) Date of filing: 24.06.2022
(51) Int. Cl.: H01B 7/02, C08G 65/34

(54) **INSULATED WIRE, COIL COMPRISING INSULATED WIRE, AND CABLE**

(30) Priority: 29.06.2021 JP 2021107987
(71) Applicant: Daicel Corporation, Osaka 530-0011 (JP)
(72) Inventor: MIKI, Ayano, Tokyo 108-8230 (JP); YABUNO, Shinya, Tokyo 108-8230 (JP); YOSHIDA, Takeshi, Tokyo 108-8230 (JP); NAKATANI, Kouji, Tokyo 108-8230 (JP)
(74) Representative: Grünecker Patent- und Rechtsanwälte PartG mbB
(86) International application number: PCT/JP2022/025377
(87) International publication number: WO 2023/276893

(57) **Abstract**

Provided is an insulated wire including a coating film excellent in insulation performance even with a small thickness. [Solution] An insulated wire of the present disclosure includes a conductor wire and an insulating film covering the conductor wire. The insulating film contains a cured product of a compound represented by Formula (1). In Formula (1), R¹ and R² each represent a group represented by Formula (r-1), D¹ and D² each represent a single bond or a linking group. L represents a divalent group having a repeating unit containing a structure represented by Formula (I) and a structure represented by Formula (II),

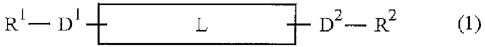

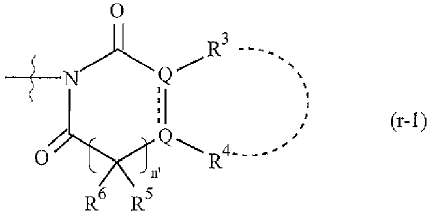

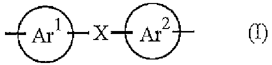

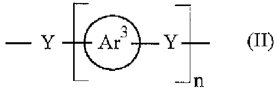

## Description

### Technical Field

The present disclosure relates to an insulated wire, a coil and a cable including the insulated wire, a motor or a generator including the coil, and an electronic or electric device including the coil or the cable. The present disclosure claims priority to JP 2021-107987 filed in Japan on June 29, 2021, the contents of which are incorporated herein.

### Background Art

An insulated wire includes an electric wire and an insulating film covering the surface of the electric wire. A coil obtained by winding the insulated wire or a cable produced by protecting the surface of the insulated wire with an outer covering is used as a component or the like of electronic and electric devices.

As a material for forming the insulating film, it is known to use a resin having excellent heat resistance such as polyimide or polyamide-imide. Patent Document 1 describes that an insulating film made of polyimide or polyamide-imide and having a thickness of from 40 to 65 µm is excellent in insulation performance and steady contact with a conductor wire.

The insulating film is manufactured by a method in which an insulating coating material containing a precursor of polyimide or polyamide-imide and a solvent is applied to a conductor wire and the resulting coating film is fired. Since a precursor of polyimide or polyamide-imide generates water at the time of sintering, in a method in which an insulating coating material is thickly applied and fired, vaporized water is difficult to be discharged to the outside, and voids or pinholes are likely to be generated in the insulating film. Thus, in order to form an insulating film having a thickness of from 40 to 65 µm, it is necessary to repeat the operation of thinly applying an insulating coating material to a thickness of about 1 µm and firing the insulating coating material about from 40 to 65 times. Unfortunately, the environmental load is large and the cost is high.

Further, it is described that NMP, DMAc, or the like is used as a solvent for dissolving the precursor of polyimide or polyamide-imide. However, the use of NMP and DMAc is limited because they are causative substances that adversely affect human health and environment.

### Citation List

### Patent Document

Patent Document 1: JP 2018-147582 A

### Summary of Invention

### Technical Problem

An object of the present disclosure is to provide an insulated wire including a coating film having excellent insulation performance even with a small thickness.

Another object of the present disclosure is to provide a manufacturing method capable of manufacturing an insulated wire including a coating film having excellent insulation performance while reducing environmental load and cost.

Another object of the present disclosure is to provide a manufacturing method for manufacturing an insulated wire including a coating film having excellent insulation performance at a firing temperature of 250°C or lower.

Another object of the present disclosure is to provide a coil or a cable including an insulated wire including a coating film having excellent insulation performance even with a small thickness.

Another object of the present disclosure is to provide a motor or a generator including the coil.

Another object of the present disclosure is to provide an electronic or electric device including the coil or the cable.

### Solution to Problem

As a result of diligent research to solve the problems described above, the present inventors found the following.
1. A compound represented by the following Formula (1) (hereinafter, may be referred to as "Compound (1)") does not generate water during sintering, and thus can form a cured product having no voids or pinholes caused by water even when the compound is thickly applied and fired.
2. The cured product of Compound (1) has a dielectric constant lower than that of polyimide or polyamide-imide and has good insulation properties. Thus, when an insulating film is formed from the cured product, the insulating film can be made thinner than when an insulating film is formed from polyimide or polyamide-imide.
3. Compound (1) exhibits solubility in toluene having a relatively low boiling point, cyclohexanone, cyclopentanone, and the like having higher safety in addition to NMP and DMAc, and thus has excellent workability.
4. Toluene, cyclohexanone, or cyclopentanone has a boiling point lower than that of NMP or DMAc and has a large difference from the curing initiation temperature of Compound (1), and thus can be volatilized while suppressing curing of Compound (1).
5. When a radical polymerization initiator is used in combination, the curing initiation temperature of Compound (1) can be lowered (for example, lowered to a temperature of 250°C or lower), and a cured product can be formed without a special heating facility.

The present disclosure has been completed based on these findings.

That is, the present disclosure provides an insulated wire including a conductor wire and an insulating film covering the conductor wire, the insulating film containing a cured product of a compound represented by Formula (1): 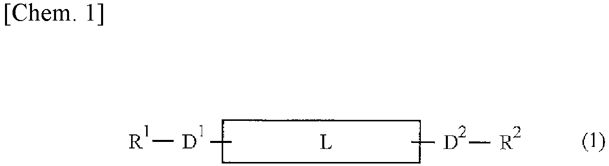 where R¹ and R² each represent a group represented by Formula (r-1): 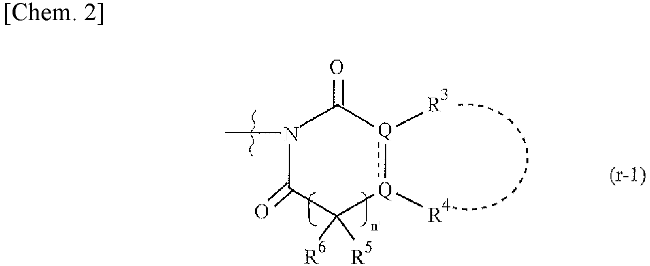 where
Q represents C or CH,
two Q's bond to each other via a single bond or a double bond,
R³ to R⁶ are identical or different, and each represent a hydrogen atom or a hydrocarbon group,
R³ and R⁴ may bond to each other to form a ring,
n' represents an integer of 0 or greater, and
a bond indicated by a wavy line is bonded to D¹ or D²;
D¹ and D² are identical or different, and each represent a single bond or a linking group; and
L represents a divalent group having a repeating unit containing a structure represented by Formula (I) and a structure represented by Formula (II): 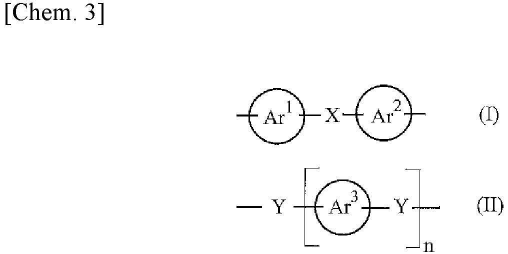
where
Ar¹ to Ar³ are identical or different, and each represent a group in which two hydrogen atoms are removed from a structure of an aromatic ring, or a group in which two hydrogen atoms are removed from a structure containing two or more aromatic rings bonded via a single bond or a linking group,
X represents -CO-, -S-, or -SO₂-,
Y is identical or different, and each represents -S-, -SO₂-, - O-, -CO-, -COO-, or -CONH-, and
n represents an integer of 0 or greater.

The present disclosure also provides the insulated wire, wherein D¹ and D² in Formula (1) are identical or different, and each represent a group selected from groups having structures represented by Formulas (d-1) to (d-4):

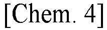

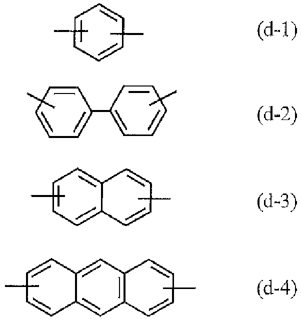

The present disclosure also provides the insulated wire, wherein R¹ and R² in Formula (1) are each a group represented by Formula (r-1'): 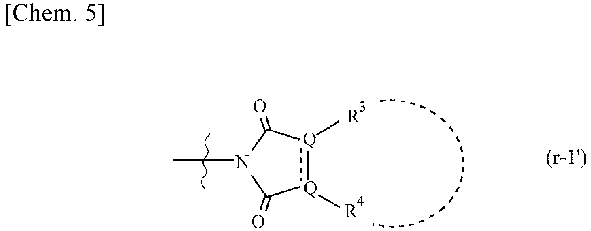 where
Q represents C or CH,
two Q's bond to each other via a single bond or a double bond,
R³ and R⁴ are identical or different, and each represent a hydrogen atom or a hydrocarbon group,
R³ and R⁴ may bond to each other to form a ring, and
a bond indicated by a wavy line is bonded to D¹ or D².

The present disclosure also provides the insulated wire, wherein L in Formula (1) is a divalent group represented by Formula (L-1-1) or Formula (L-1-2): 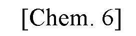 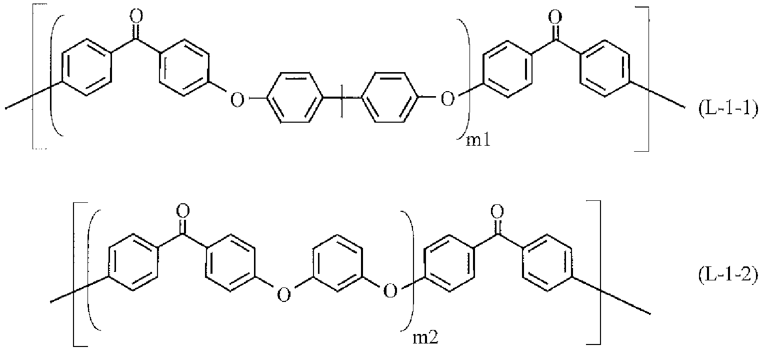 where m1 and m2 each represent a number of 2 to 50.

The present disclosure also provides the insulated wire, wherein a cured product of the compound represented by Formula (1) has a relative dielectric constant of 2.7 or less at 10 GHz.

The present disclosure also provides a method for producing an insulated wire, the method including applying an insulating coating material containing a compound represented by Formula (1) and a solvent to a conductor wire, and heating the insulating coating material to produce the insulated wire: 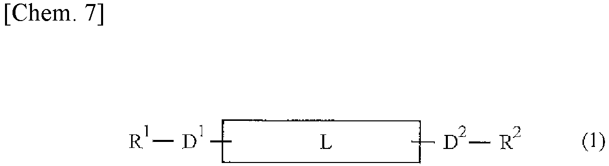 where R¹ and R² each represent a group represented by Formula (r-1): 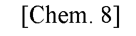 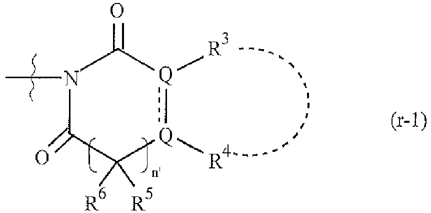 where
Q represents C or CH,
two Q's bond to each other via a single bond or a double bond, R³ to R⁶ are identical or different, and each represent a hydrogen atom or a hydrocarbon group,
R³ and R⁴ may bond to each other to form a ring, n' represents an integer of 0 or greater, and a bond indicated by a wavy line is bonded to D¹ or D²;
D¹ and D² are identical or different, and each represent a single bond or a linking group; and
L represents a divalent group having a repeating unit containing a structure represented by Formula (I) and a structure represented by Formula (II): 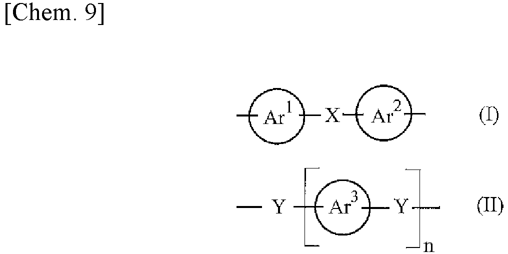
where
Ar¹ to Ar³ are identical or different, and each represent a group in which two hydrogen atoms are removed from a structure of an aromatic ring or a group in which two hydrogen atoms are removed from a structure having two or more aromatic rings bonded via a single bond or a linking group,
X represents -CO-, -S-, or -SO₂-,
Y is identical or different, and each represents -S-, -SO₂-, - O-, -CO-, -COO-, or -CONH-, and n represents an integer of 0 or greater.

The present disclosure also provides a coil including the insulated wire.

The present disclosure also provides a motor including the coil.

The present disclosure also provides a generator including the coil.

The present disclosure also provides an electronic or electric device including the coil.

The present disclosure also provides a cable including the insulated wire.

The present disclosure also provides an electronic or electric apparatus including the cable.

### Advantageous Effects of Invention

The insulated wire of the present disclosure includes an insulating film having no void or pinhole but having high insulation properties. Thus, when the insulated wire is used, occurrence of short circuit, ground fault, electric leakage, and the like can be suppressed, and safety is achieved. The insulated wire can be used for a coil, a cable, or the like, for example. The coil including the insulated wire can be suitably used for a motor, a generator, or the like. A cable including the insulated wire can be suitably used as a connecting component in an electronic or electric device.

The insulated wire of the present disclosure can be manufactured in a short process, and the manufacturing cost can be reduced. Also, the environmental load can be reduced. Further, the insulating film included in the insulated wire can maintain high insulation performance even when the thickness is reduced as compared with a known insulating film. Thus, the use of the insulated wire can meet the demand for further reduction in size and weight of electronic and electric devices.

### Description of Embodiments

### Insulated Wire

An insulated wire of the present disclosure includes a conductor wire and an insulating film covering the conductor wire.

The insulating film contains a cured product of a compound represented by Formula (1). A proportion of the cured product of the compound represented by Formula (1) in the total amount of the insulating film is, for example, 50 wt.% or greater, preferably 60 wt.% or greater, more preferably 70 wt.% or greater, particularly preferably 80 wt.% or greater, most preferably 90 wt.% or greater, and especially preferably 95 wt.% or greater. Note that the upper limit is 100 wt.%. That is, the insulating film may contain only a cured product of the compound represented by Formula (1).

The insulated wire is produced, for example, by applying an insulating coating material containing Compound (1) and a solvent to the surface of a conductor wire and firing the resulting thin film to form an insulating film. That is, the cured product of the compound represented by Formula (1) is a sintered body of the insulating coating material.

The insulating coating material contains Compound (1) and a solvent. The content of Compound (1) in the insulating coating material is, for example, 10 wt.% or greater, preferably 15 wt.% or greater, more preferably 20 wt.% or greater, more preferably 30 wt.% or greater, more preferably 50 wt.% or greater, still more preferably 60 wt.% or greater, and particularly preferably 65 wt.% or greater of the total (100 wt.%) of Compound (1) and the solvent. The upper limit of the content of Compound (1) is, for example, 95 wt.%, preferably 90 wt.%, and particularly preferably 80 wt.%. The insulating coating material may contain an additional component as necessary in addition to Compound (1) and the solvent. An example of the additional component includes a radical polymerization initiator. When a radical polymerization initiator is added to the insulating coating material, an effect of lowering the firing temperature of the insulating coating material (for example, lowering the firing temperature to 250°C or lower) can be obtained.

The insulating coating material can be prepared by mixing Compound (1) and a solvent, and heating and stirring the mixture at a temperature of, for example, 80°C or lower, preferably from 40 to 80°C, and particularly preferably from 50 to 70°C.

The method for applying the insulating coating material to the conductor wire is not particularly limited as long as a thin film of the insulating coating material can be formed on the surface of the conductor wire, and an example thereof includes a dip coating method. The dip coating method is a method of forming a thin film by immersing a conductor wire in an insulating coating material and attaching the insulating coating material to the surface of the conductor wire.

When the insulating coating material is applied to the conductor wire, the temperature of the insulating coating material is preferably maintained at a temperature lower than the exothermic onset temperature of Compound (1). Since the curing reaction of Compound (1) does not proceed at the above-described temperature, the insulating coating material can be applied to the conductor wire while suppressing thickening of the insulating coating material, and a thin film having a uniform thickness can be formed.

The application of the insulating coating material to the conductor wire can be repeated a plurality of times until the thickness of the thin film reaches a desired thickness. Compound (1) does not generate water during curing. Thus, even when the thin film is laminated to a desired thickness and then fired, no void or pinhole caused by water is generated. In addition, when firing is performed after laminating the thin films, the number of times of firing can be reduced, which leads to power saving and energy saving. After the application of the insulating coating material, the coating film is preferably dried before the next application. The coating film can be dried, for example, by heating at a temperature higher than room temperature and lower than the exothermic onset temperature of Compound (1).

The dried thin film is fired, specifically, heated and fired at a temperature equal to or higher than the exothermic onset temperature of Compound (1), whereby curing of Compound (1) can be initiated, and an insulating film containing a cured product of Compound (1) can be formed.

The exothermic onset temperature of Compound (1) is, for example, 220°C or higher, particularly 230°C or higher, further 240°C or higher, especially 250°C or higher. In addition, the upper limit of the exothermic onset temperature is, for example, 320°C. The exothermic onset temperature of Compound (1) can be determined by a DSC measurement (rate of temperature increase: 20°C/min, in nitrogen).

A radical polymerization initiator may be added to the insulating coating material when it is required to lower the firing temperature to a temperature lower than the exothermic onset temperature (for example, a temperature of 250°C or lower). The amount of the radical polymerization initiator to be added is, for example, from 0.1 to 5 parts by weight per 100 parts by weight of Compound (1).

Further, by setting the firing atmosphere to an inert gas atmosphere (for example, a nitrogen atmosphere, an argon atmosphere, or the like), the radical polymerization reaction can be promoted, and the firing temperature can be further lowered.

The cured product of Compound (1) thus produced (or an insulating film containing the cured product of Compound (1)) has a relative dielectric constant of, for example, 2.70 or less, preferably 2.65 or less, and particularly preferably 2.60 or less, at 10 GHz. The lower limit of the dielectric constant is, for example, 2.20. Since the cured product of Compound (1) has the above-described relative dielectric constant, the insulating film containing the cured product of Compound (1) has excellent insulation properties.

Since the insulating film containing a cured product of Compound (1) has excellent insulation properties, the insulating film can exert a sufficient insulating function even with a small thickness (for example, even when the thickness is 30 µm or less). The lower limit of the thickness of the insulating film is, for example, 10 µm.

The cured product of Compound (1) has high steady contact with a conductor wire, and for example, even when the insulated wire (thickness of cured product of Compound (1): 30 µm, conductor wire diameter: 1.0 mm) is wound around a mandrel (diameter: 1 mm), no cracks occur.

A 5% weight loss temperature (Tas) of a cured product of Compound (1) measured at a rate of temperature increase of 20°C/min (in nitrogen) is 300°C or higher, preferably 400°C or higher, and particularly preferably 500°C or higher. The upper limit of the 5% weight loss temperature (Tas) is, for example, 600°C. Thus, the insulating film containing the cured product has excellent heat resistance, and the insulated wire including the insulating film having excellent heat resistance like this can be soldered and has versatility.

### Compound (1)

Compound (1) is represented by Formula (1): 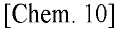 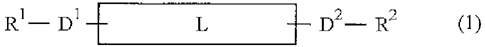 where R¹ and R² each represent a group represented by Formula (r-1): 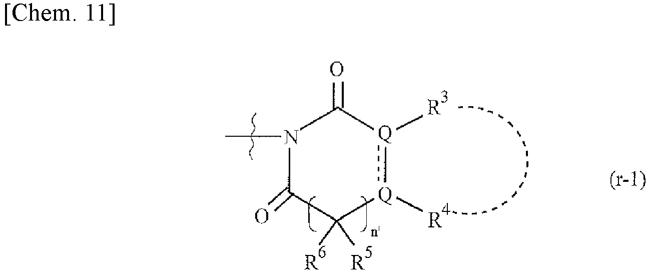 where
Q represents C or CH,
two Q's bond to each other via a single bond or a double bond,
R³ to R⁶ are identical or different, and each represent a hydrogen atom or a hydrocarbon group,
R³ and R⁴ may bond to each other to form a ring, n' represents an integer of 0 or greater, and a bond indicated by a wavy line is bonded to D¹ or D²;
D¹ and D² are identical or different, and each represent a single bond or a linking group; and
L represents a divalent group having a repeating unit containing a structure represented by Formula (I) and a structure represented by Formula (II): 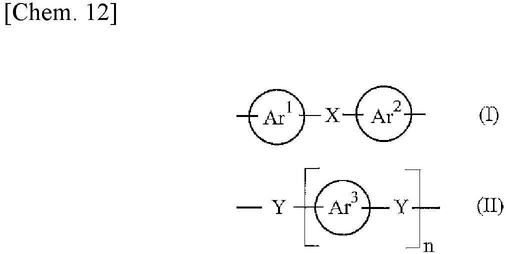
where
Ar¹ to Ar³ are identical or different, and each represent a group in which two hydrogen atoms are removed from a structure of an aromatic ring or a group in which two hydrogen atoms are removed from a structure having two or more aromatic rings bonded via a single bond or a linking group (more specifically, from a portion of the aromatic rings in a structural in which two or more aromatic rings are bonded via a single bond or a linking group),
X represents -CO-, -S-, or -SO₂-;
Y is identical or different, and each represents -S-, -SO₂-, - O-, -CO-, -COO-, or -CONH-; and
n represents an integer of 0 or greater.

Examples of the hydrocarbon group in R³ to R⁶ include a saturated or unsaturated aliphatic hydrocarbon group (preferably an alkyl group having from 1 to 10 carbons, an alkenyl group having from 2 to 10 carbons, or an alkynyl group having from 2 to 10 carbons), an aromatic hydrocarbon group (preferably an aryl group having from 6 to 10 carbons, such as a phenyl group or a naphthyl group), or a group in which two or more groups selected from the saturated or unsaturated aliphatic hydrocarbon groups and aromatic hydrocarbon groups described above are bonded.

R³ and R⁴ may be bonded to each other to form a ring with an adjacent carbon atom. Examples of the ring include alicyclic rings having from 3 to 20 carbons and aromatic rings having from 6 to 14 carbons. Examples of the alicyclic rings having from 3 to 20 carbons include approximately 3 to 20-membered (preferably 3 to 15-membered, particularly preferably 5 to 8-membered) cycloalkane rings, such as a cyclopropane ring, a cyclobutane ring, a cyclopentane ring, and a cyclohexane ring; approximately 3 to 20-membered (preferably 3 to 15-membered, particularly preferably 5 to 8-membered) cycloalkene rings, such as a cyclopentene ring and a cyclohexene ring; and crosslinked cyclic hydrocarbon groups, such as a perhydronaphthalene ring, a norbomane ring, a norbornene ring, an adamantane ring, a tricyclo[5.2.1.0^{2,6}]decane ring, and a tetracyclo[4.4.0.1^{2,5}.1^{7,10}]dodecane ring. The aromatic rings having from 6 to 14 carbons include a benzene ring and a naphthalene ring.

n' is an integer of 0 or greater, and is, for example, an integer from 0 to 3, and preferably 0 or 1.

The group represented by Formula (r-1) is, in particular, preferably a group selected from groups represented by Formulas (r-1-1) to (r-1-6): 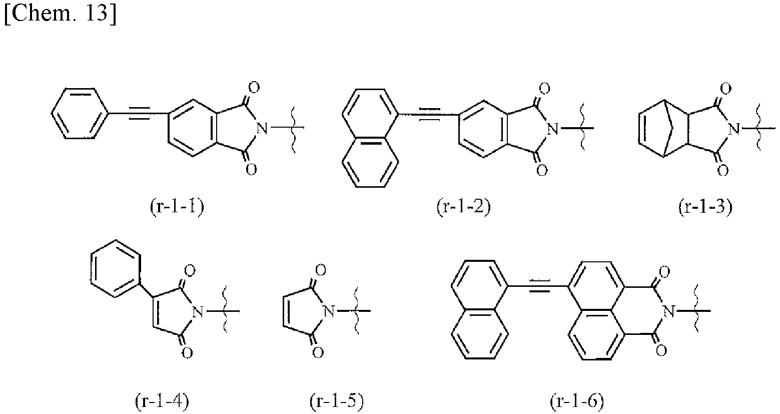 where a bond from a nitrogen atom bonds to D¹ or D² in Formula (1).

One or two or more substituents may bond to each of the groups represented by Formulas (r-1-1) to (r-1-6). Examples of the substituent include an alkyl group having from 1 to 6 carbons, an alkoxy group having from 1 to 6 carbons, and a halogen atom.

The group represented by Formula (r-1) is particularly preferably a group selected from the groups represented by Formulas (r-1-1) to (r-1-5), and particularly preferably a group represented by Formula (r-1-1) or (r-1-5).

The group represented by Formula (r-1) is, in particular, preferably a group represented by Formula (r-1'): 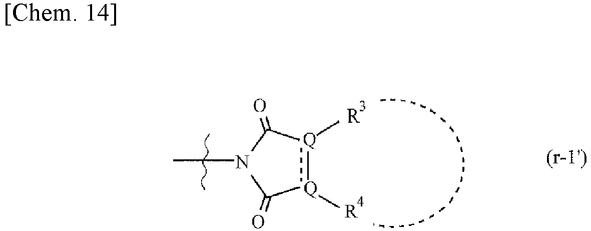 where Q, R³, and R⁴ are the same as described above.

In Formula (1), D¹ and D² are identical or different, and each represent a single bond or a linking group. Examples of the linking group include divalent hydrocarbon groups, divalent heterocyclic groups, a carbonyl group, an ether bond, an ester bond, a carbonate bond, an amido bond, an imido bond, and groups made by linking a plurality of these.

D¹ and D² described above are each preferably a group containing a divalent aromatic hydrocarbon group, and particularly preferably, an arylene group having from 6 to 14 carbons, such as a 1,4-phenylene group, a 1,3-phenylene group, a 4,4'-biphenylene group, a 3,3'- biphenylene group, a 2,6-naphthalenediyl group, a 2,7-naphthalenediyl group, a 1,8-naphthalenediyl group, or an anthracenediyl group, because a cured product having particularly excellent heat resistance is formed.

D¹ and D² described above are each preferably a group selected from a group including structures represented by Formulas (d-1) to (d-4), particularly preferably a group including a phenylene group (1,2-phenylene group, 1,3-phenylene group, or 1,4-phenylene group) represented by Formula (d-1), and especially preferably a group including a 1,4-phenylene group.

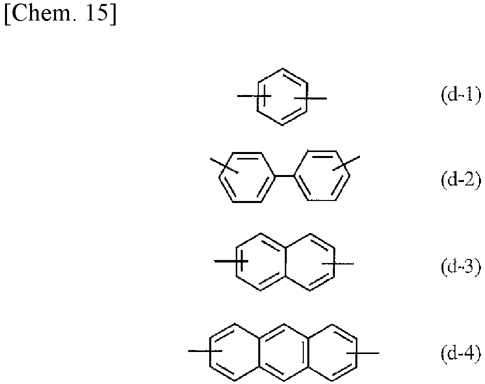

Furthermore, D¹ and D² described above is preferably a group in which, together with the divalent aromatic hydrocarbon group, at least one group selected from the group consisting of a carbonyl group, an ether bond, an ester bond, a carbonate bond, an amido bond, and an imido bond is linked, and especially preferably a group in which an ether bond is linked to the divalent aromatic hydrocarbon group described above.

Thus, the R¹-D¹-group and the R²-D²-group in Formula (1) are preferably a group represented by Formula (rd-1'-1) or (rd-1'-2): 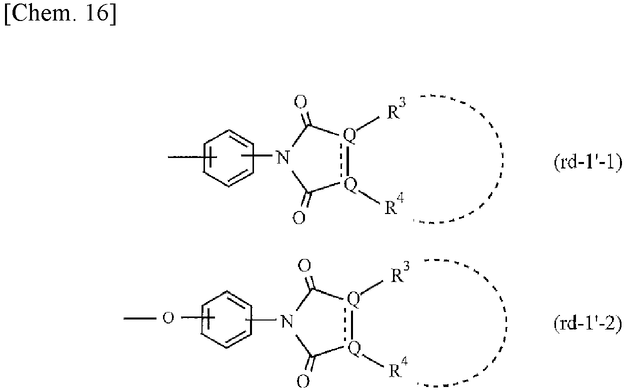 where Q, R³, and R⁴ are the same as described above.

Ar¹ to Ar³ are identical or different, and each represent a group in which two hydrogen atoms are removed from a structure of an aromatic ring or a group in which two hydrogen atoms are removed from a structure having two or more aromatic rings bonded via a single bond or a linking group.

Examples of the aromatic ring, which is an aromatic hydrocarbon ring, include aromatic rings having from 6 to 14 carbons, such as benzene, naphthalene, anthracene, and phenanthrene. Among these, an aromatic ring having from 6 to 10 carbons, such as benzene or naphthalene, is preferred.

Examples of the linking group include divalent hydrocarbon groups having from 1 to 5 carbons and groups in which one or more hydrogen atoms of a divalent hydrocarbon group having from 1 to 5 carbons are substituted with halogen atom(s).

It is preferable that Ar¹ to Ar³ be identical or different, and each represent a group in which two hydrogen atoms are removed from a structure of an aromatic ring having from 6 to 14 carbons, or a group in which two hydrogen atoms are removed from a structure containing two or more aromatic rings each having from 6 to 14 carbons, the aromatic rings being bonded via a single bond, a linear or branched-chain alkylene group having from 1 to 5 carbons, or a group in which one or more hydrogen atoms of a linear or branched-chain alkylene group having from 1 to 5 carbons are substituted with a halogen atom.

Ar¹ to Ar³ described above are identical or different and, among others, are each preferably a group selected from the groups represented by Formulas (a-1) to (a-5). Note that, in the following formulas, positions of bonding are not particularly limited.

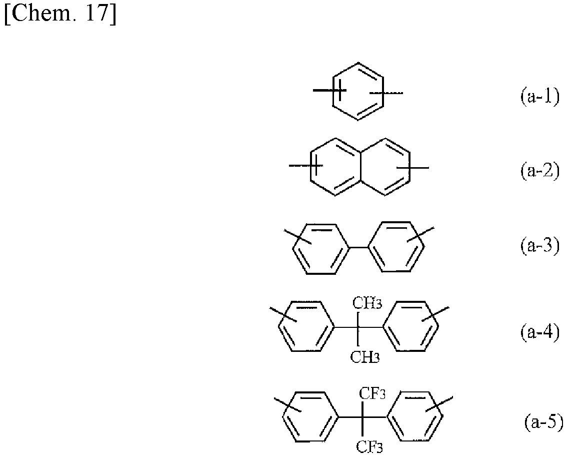

Of these, Ar¹ and Ar² in Formula (I) are each preferably a group in which two hydrogen atoms are removed from a structure of an aromatic ring having from 6 to 14 carbons, and particularly preferably a group represented by Formula (a-1) or (a-2). Furthermore, of these, X is preferably -CO- or -SO₂-.

Ar³ in Formula (II) is, in particular, preferably a group selected from the groups represented by Formulas (a-1), (a-4), and (a-5). Furthermore, in particular, Y is preferably -S-, -O-, or -SO₂-.

n in Formula (II) represents an integer of 0 or greater and is, for example, an integer from 0 to 5, preferably an integer from 1 to 5, and particularly preferably an integer from 1 to 3.

L in Formula (1) is preferably a divalent group represented by Formula (L-1-1) or Formula (L-1-2).

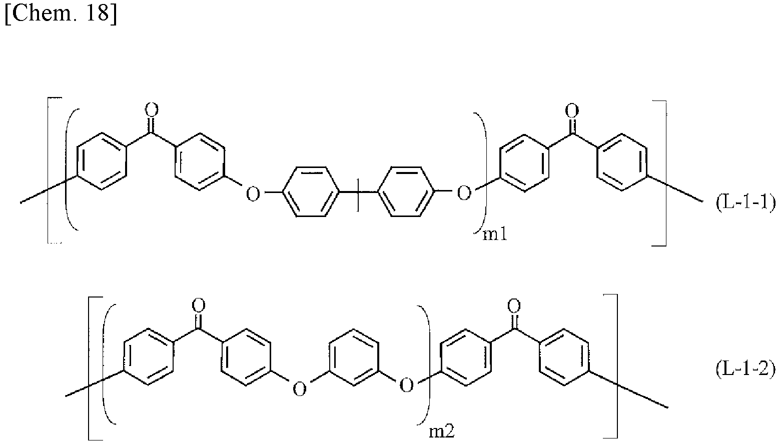

In the formulas, m1 and m2 are each a number of repeating units shown in round brackets included in the molecular chain (= divalent group represented by Formula (L-1-1) or (L-1-2)), that is, the average degree of polymerization, and are each, for example, from 2 to 50, preferably from 3 to 40, more preferably from 4 to 30, particularly preferably from 5 to 20, and most preferably from 5 to 10. Note that the values of m1 and m2 can be determined by GPC measurement or spectrum analysis of NMR.

The number of moles of the group represented by Formula (r-1) per gram of Compound (1) (hereinafter, it may be referred to as "functional group concentration") is, for example, 0.5 × 10⁻⁴ to 20 × 10⁻⁴ mol/g. The upper limit of the functional group concentration is preferably 15 × 10⁻⁴ mol/g, most preferably 10 × 10⁻⁴ mol/g. The lower limit of the functional group concentration is preferably 1.0 × 10⁻⁴ mol/g, most preferably 1.5 × 10⁻⁴ mol/g. When the functional group concentration of Compound (1) falls within the range described above, a cured product having excellent solvent solubility, toughness, and heat resistance can be formed. On the other hand, when the functional group concentration is less than the range described above, the solvent solubility tends to decrease. Further, when the functional group concentration is greater than the range described above, forming a cured product with excellent toughness tends to be difficult.

The functional group concentration is provided by determining the area of each peak from the ¹H-NMR spectrum of Compound (1) and substituting the determined value into the following equation. functional group concentration = [peak area of group represented by Formula (r- 1)/number of protons in group represented by Formula (r-1)]/Σ[(each peak area/number of protons in group to which each peak is assigned) × chemical formula weight corresponding to each peak]

The number average molecular weight (Mn; calibrated with polystyrene standard) of Compound (1) is, for example, from 1000 to 15000, preferably from 1500 to 12000, more preferably from 2000 to 10000, particularly preferably from 2200 to 8000, and most preferably from 2500 to 7500.

The weight average molecular weight (Mw; calibrated with polystyrene standard) of Compound (1) is, for example, from 1000 to 45000. The lower limit of the weight average molecular weight (Mw) is preferably 1500, more preferably 2500, particularly preferably 3000, and most preferably 4000. The upper limit of the weight average molecular weight (Mw) is preferably 40000, more preferably 35000, and even more preferably 25000.

Mn and Mw are determined by gel permeation chromatography (GPC) measurements (solvent: chloroform; calibrated with polystyrene standard). Compound (1), having the molecular weight described above, is excellent in solvent solubility.

Compound (1) has excellent solvent solubility and the solubility thereof is, for example, 1 g or more, preferably 5 g or more, and particularly preferably 10 g or more, per 100 g of the solvent at 23°C.

Compound (1) can be manufactured by, for example, allowing a compound represented by Formula (2): 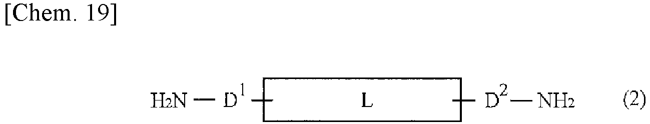 where D¹, D², and L are as defined above to react with a compound represented by Formula (3): 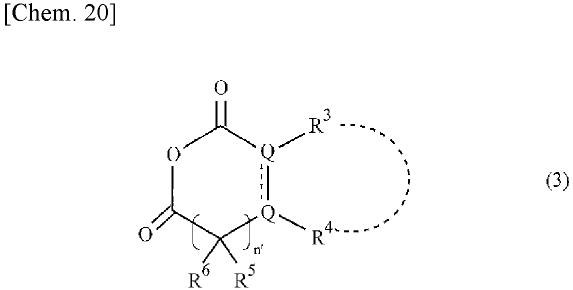 where Q and R³ to R⁶ are as defined above.

Of the compounds represented by Formula (2), the compound represented by Formula (2-1) can be manufactured via Steps [1-1] and [1-2], for example.

Step [1-1]: A compound represented by Formula (4) and a compound represented by Formula (5) are allowed to react in the presence of a base to form a compound represented by Formula (6).

Step [1-2]: An aminoalcohol (a compound represented by Formula (7)) is allowed to react with the compound represented by Formula (6):

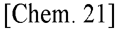

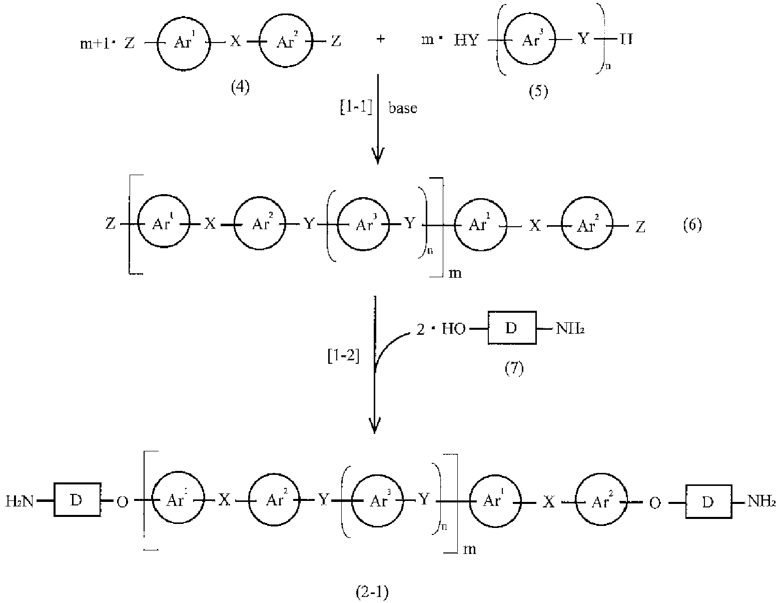

In the above formulas, Ar¹ to Ar³, X, Y, and n are identical to those described above. D represents a linking group, and examples of the linking group include the same groups that are exemplified for the linking group in D¹ and D². m is the average degree of polymerization of the repeating unit and is, for example, from 3 to 50, preferably from 4 to 30, and particularly preferably from 5 to 20. Z represents a halogen atom.

### Step [1-1]

Examples of the compound represented by Formula (4) include benzophenone, halides of bisaryl compounds such as 2-naphthylphenylketo, and derivatives thereof.

Examples of the compound represented by Formula (5) include hydroquinone, resorcinol, and bisphenol A.

Examples of the base include inorganic bases, such as sodium hydroxide, potassium hydroxide, calcium hydroxide, sodium carbonate, potassium carbonate, and sodium hydrogencarbonate; and organic bases, such as pyridine and triethylamine. The used amount of the base can be appropriately adjusted based on the type of the base. For example, the used amount of diacidic base, such as calcium hydroxide, is approximately from 1.0 to 2.0 mol per mol of the compound represented by Formula (5).

Furthermore, the reaction can be carried out in the presence of a solvent. Examples of the solvent that can be used include an organic solvent, such as N-methyl-2-pyrrolidone, dimethylformamide or dimethyl sulfoxide, or a solvent mixture of two or more thereof.

The reaction atmosphere is not particularly limited as long as it does not inhibit the reaction. For example, a nitrogen atmosphere, an argon atmosphere, or the like may be used.

The reaction temperature is, for example, approximately from 100 to 200°C.

### Step [1-2]

Examples of the compound represented by Formula (7) above include 4-aminophenol, 2-amino-6-hydroxynaphthalene, and regioisomers and derivatives thereof.

Furthermore, the reaction can be carried out in the presence of a solvent. As the solvent, the same solvent as that used in step [1] can be used.

The reaction temperature is, for example, approximately from 100 to 200°C.

### Solvent

Examples of the solvent used for the insulating coating material include chain ketones, such as methyl ethyl ketone and methyl isobutyl ketone; cyclic ketones, such as cycloheptanone and cyclohexanone; amides, such as formamide, acetamide, N-methyl-2-pyrrolidone (NMP), N,N-dimethylformamide, and N,N-dimethylacetamide (DMAc); halogenated hydrocarbons, such as methylene chloride, chloroform, 1,2-dichloroethane, chlorobenzene, bromobenzene, dichlorobenzene, benzotrifluoride, and hexafluoro-2-propanol; sulfoxides, such as dimethylsulfoxide (DMSO), diethyl sulfoxide, and benzyl phenyl sulfoxide; tetrahydrofuran (THF); aromatic hydrocarbons, such as benzene, toluene, and xylene; and liquid mixtures of two or more types of these.

Among these solvents, preferable is a solvent having a large difference between the exothermic onset temperature of Compound (1) and the boiling point (= boiling point under normal pressure) of the solvent from the viewpoint that the solvent can be volatilized while suppressing the progress of the curing reaction of Compound (1). In addition, it is preferable to use a solvent having a boiling point of 150°C or lower because decomposition of the radical polymerization initiator can be suppressed.

Among these solvents, preferable is at least one solvent selected from the aromatic hydrocarbon, the cyclic ketone, and the amide, and particularly preferable is at least one solvent selected from the aromatic hydrocarbon and the cyclic ketone.

### Radical Polymerization Initiator

The radical polymerization initiator includes a photoradical polymerization initiator and a thermal radical polymerization initiator.

Examples of the photoradical polymerization initiator include benzophenone, acetophenone benzyl, benzyldimethyl ketone, benzoin, benzoin methyl ether, benzoin ethyl ether, benzoin isopropyl ether, dimethoxyacetophenone, dimethoxy phenylacetophenone, diethoxyacetophenone, diphenyl disulfite, methyl o-benzoylbenzoate, ethyl 4-dimethylaminobenzoate (available from Nippon Kayaku Co., Ltd.; trade name "Kayacure EPA" or the like), 2,4-diethylthioxanthone (available from Nippon Kayaku Co., Ltd., trade name "Kayacure DETX" or the like), 2-methyl-1-[4-(methyl)phenyl]-2-morpholino-propanone-1 (available from Ciba-Geigy AG; trade name "Irgacure 907" or the like), 1-hydroxycyclohexyl phenyl ketone (available from Ciba-Geigy AG, trade name "Irgacure 184" or the like), 2-dimethylamino-2-(4-morpholino) benzoyl-1-phenylpropane, and other such 2-amino-2-benzoyl-1-phenyl alkane compounds, tetra(t-butylperoxy carbonyl) benzophenone, benzil, 2-hydroxy-2-methyl-1-phenyl-propan-1-one, 4,4'-bis(diethylamino)benzophenone, and other such amino benzene derivatives, 2,2'-bis (2-chlorophenyl)-4,5,4',5'-tetraphenyl-1,2'-biimidazole (available from Hodogaya Chemical Co., Ltd., trade name "B-CIM" or the like), and other such imidazole compounds, 2,6-bis (trichloromethyl)-4-(4-methoxynaphthalen-1-yl)-1,3,5-triazine, and other such halomethylated triazine compounds, and 2-trichloromethyl-5-(2-benzofuran-2-yl-ethenyl)-1,3,4-oxadiazole, and other such halomethyl oxadiazole compounds. One of these can be used alone or two or more in combination. Photosensitizers can also be added if necessary.

Examples of the thermal radical polymerization initiator include azo compounds such as azobisisobutyronitrile, and organic peroxides. Examples of the organic peroxide include hydroperoxides, dialkyl peroxides, peroxy esters, diacyl peroxides, peroxy dicarbonates, peroxy ketals, and ketone peroxides (specifically, benzoyl peroxide, t-butylperoxy-2-ethylhexanoate, 2,5-dimethyl-2,5-di(2-ethylhexanoyl)peroxyhexane, t-butylperoxy benzoate, t-butyl peroxide, cumene hydroperoxide, dicumyl peroxide, di-t-butyl peroxide, 2,5-dimethyl-2,5-dibutyl peroxyhexane, 2,4-dichlorobenzoyl peroxide, 1,4-di(2-t-butylperoxyisopropyl)benzene, 1,1-bis(t-butylperoxy)-3,3,5-trimethylcyclohexane, methylethylketone peroxide, and 1,1,3,3-tetramethylbutyl peroxy-2-ethylhexanoate). One of these can be used alone or two or more in combination.

### Conductor Wire

The conductor wire is a wiring formed of a material having conductivity. Examples of the material having conductivity include copper, a copper alloy, aluminum, an aluminum alloy, and stainless steel. Among these, preferable is copper from the viewpoint of obtaining high conductivity. Thus, a copper wire is preferable as the conductor wire.

The conductor wire may have a plating layer (for example, a tin plating layer) for suppressing corrosion on its surface.

The diameter of the conductor wire is, for example, from 0.5 to 2.0 mm.

The cross-sectional shape of the conductor wire is not particularly limited, and can be appropriately selected according to the application, and examples thereof include a circular shape, a rectangular shape, and a square shape.

### Coil

A coil of the present disclosure includes the insulated wire. More specifically, the coil has a configuration in which the insulated wire is wound. The coil is suitably used in an electronic or electric device (for example, a device including a conversion device between electric energy and mechanical energy, such as a motor (for example, a motor of a hybrid vehicle or an electric vehicle) or a generator).

The insulating film included in the insulated wire has excellent insulation properties, and can ensure high insulation even when the insulating film is thinned. Thus, in the coil of the present disclosure, by thinning the insulating film, it is possible to realize a reduction in size and weight while maintaining insulation properties.

In addition, in the insulated wire described above, steady contact between the insulating film and the conductor wire is high, and the insulating film and the conductor wire are not peeled off due to a load at the time of coil winding. Thus, the coil of the present disclosure including the insulated wire has high reliability in electrical characteristics.

### Cable

A cable of the present disclosure includes the insulated wire. More specifically, the cable has a configuration in which one insulated wire or several insulated wires are bundled and a protective outer coating (= sheath) is applied to the surface thereof. The cable can be suitably used as a connection component of an electronic or electric device (for example, a cord of a charger of a smartphone or the like, a LAN cable of an electronic device, a cord of a home appliance, or the like).

The insulating film included in the insulated wire has excellent insulation properties and can ensure high insulation even when the insulating film is thinned. Thus, in the cable of the present disclosure, by thinning the insulating film, it is possible to realize a reduction in size and weight while maintaining insulation properties.

In addition, since the insulated wire has high steady contact between the insulating film and the conductor wire, the cable of the present disclosure including the insulated wire has high reliability in electrical characteristics.

Further, an electronic or electric device including the cable also has high reliability in electrical characteristics. The electronic or electric device is, for example, a device including a connection component such as a cord or a LAN cable, and examples thereof include a charger such as a smartphone, an electronic device such as a smartphone including the charger, and a home appliance.

Each of the configurations, their combinations, and the like of the present disclosure above is an example, and addition, omission, substitution, and change of the configuration can be appropriately made without departing from the gist of the present disclosure.

### Examples

Hereinafter, the present disclosure will be described more specifically with reference to examples, but the present disclosure is not limited by these examples.

Note that the measurements were performed under the following conditions.

### NMR Measurement

Measuring instrument: JEOL ECA 500 or BRUKER AVANCE 600 MHz
Measurement solvent: deuterated DMSO, deuterated chloroform, or a liquid mixture of deuterated chloroform/pentafluorophenol (PFP) = 2/1 (wt/wt)
Chemical shift: TMS as the reference
GPC Measurement
Apparatus: pump "LC-20AD" (available from Shimadzu Corporation)
Detector: RID-10A (available from Shimadzu Corporation) or MODEL 302 TDA (available from Viscotek Corporation) and UV 2501 (available from Viscotek Corporation)
Solvent: THF or chloroform
Column: (Shodex KF-803) × 1, (Shodex KF 802) × 1, and (Shodex KF 801) × 2
Flow rate: 1.0 mL/min
Temperature: 40°C
Sample concentration: 0.1% (wt/vol) calibrated with polystyrene standard
DSC Measurement
Apparatus: DSC Q 2000 (available from TA Instruments)
Rate of temperature increase: 20°C/min
Atmosphere: nitrogen atmosphere
TGA Measurement
Apparatus: TG/DTA6200 (available from Seiko Instruments Inc.)
Rate of temperature increase: 20°C/min
Atmosphere: nitrogen atmosphere

### Preparation Example 1: Preparation of Compound (1-1)

### Step 1-1

A reactor equipped with a stirrer, a nitrogen inlet tube, and a Dean-Stark apparatus was charged with 37.25 g of 4,4'-difluorobenzophenone, 32.48 g of bisphenol A, 29.50 g of anhydrous potassium carbonate, 214.4 g of N-methylpyrrolidone, and 90.4 g of toluene, then the mixture was heated while being stirred under a nitrogen atmosphere, and toluene was refluxed at 130 to 140°C for 4 hours. Subsequently, the contents were further heated to distill off toluene at 170 to 180°C. Furthermore, stirring was continued at 170 to 180°C for 10 hours, after which the temperature was returned to room temperature.

### Step 1-2

Thereafter, 6.520 g of 4-aminophenol, 8.260 g of anhydrous potassium carbonate, 27.9 g of N-methylpyrrolidone, and 117.4 g of toluene were added to the reactor containing the reaction product, and heated again under a nitrogen atmosphere while being stirred, and toluene was refluxed at 130 to 140 °C for 3 hours. Subsequently, heating was performed to distill off the toluene at 170 to 180°C, and stirring was further continued for 4 hours while the above temperature was maintained. The mixture was then cooled to room temperature, and the reaction solution was added to 3000 mL of methanol and filtered, and thereby a powdery solid was formed. This powdery solid was repeatedly washed with methanol and water, and then dried overnight at 80°C under reduced pressure, and thereby a powdery solid of diamine-1 (compound represented by the following formula) was produced.

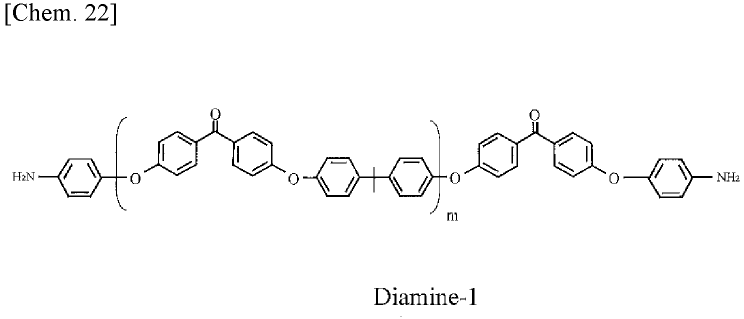

### Step 2

A reactor provided with a stirrer, a nitrogen inlet tube, and Dean-Stark apparatus was charged with 49.70 g of the diamine-1 produced in Step 1, 6.03 g of maleic acid anhydride, 316.0 g of N-methylpyrrolidone, and 178.3 g of toluene, and the mixture was stirred in a nitrogen atmosphere at room temperature for 5 hours. Subsequently, 1.086 g of p-toluenesulfonic acid was added as a catalyst, and the temperature was increased to 140°C, after which stirring was continued for 8 hours, toluene was refluxed, and moisture was removed. The reaction solution was brought back to room temperature, and then added to 3000 mL of methanol, and thereby a powdery solid was formed. This powdery solid was repeatedly washed with methanol and water and then dried overnight at 80°C under reduced pressure, whereby 48.8 g of Compound (1-1) (including a compound represented by Formula (1-1)) was produced.

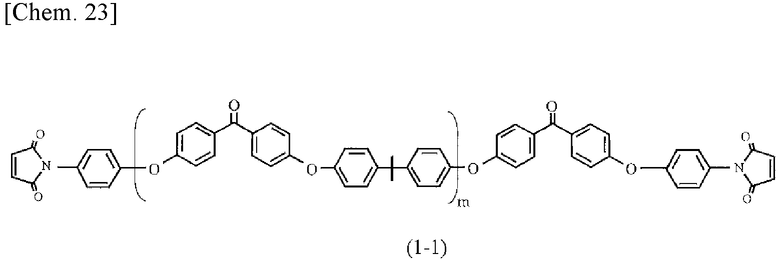

For the resulting Compound (1 -1), the functional group concentration was calculated from the integrated intensity ratio of signals of ¹H-NMR spectrum. Furthermore, the number average molecular weight and weight average molecular weight were determined by GPC measurement. Further, the exothermic onset temperature was determined by DSC measurement, and the 5% thermal weight loss temperature (Tas) was determined by TGA measurement. The results are summarized and presented in the following Table 1.

[Table 1]

**Table 1**

| | Functional group concentration | Molecular weight | | Exothermic onset temperature (°C) | T_{d5} |
|---|---|---|---|---|---|
| | µmol/g | Mn | Mw | °C | °C |
| Compound (1-1) | 587.3 | 3500 | 5900 | 268 | 515 |

The solvent solubility of the resulting Compound (1-1) was measured by the following method.

Compound (1-1) and the solvent listed in the following table were mixed at a ratio such that the concentration of Compound (1-1) was 20 wt.%, the mixture was stirred at 60°C for 1.5 hours, and the solvent solubility of Compound (1-1) was evaluated.

As a result, Compound (1 -1) was completely dissolved in all the solvents. After the dissolution, no precipitate was generated during storage for 30 days. That is, it was confirmed that Compound (1-1) had good solvent solubility (∘).

The results are summarized and presented in the following table.
[Table 2]

**Table 2**

| Solvent | Solvent solubility | Solvent boiling point (°C) |
|---|---|---|
| NMP | good | 202 |
| DMSO | good | 189 |
| DMAc | good | 165 |
| Cyclohexanone | good | 156 |
| Cyclopentanone | good | 131 |
| Toluene | good | 111 |
| THF | good | 66 |
| Chloroform | good | 61 |

### Preparation Example 2 (Preparation of Insulating Coating Material)

Compound (1-1) produced in Preparation Example 1 and cyclohexane were mixed at a ratio such that the concentration of Compound (1-1) was 20 wt.%, and the mixture was stirred at 60°C at 400 rpm for 1.5 to 2 hours to dissolve Compound (1-1). Subsequently, a radical polymerization initiator (trade name "PERCUMYL D", available from NOF Corporation) was added in an amount of 1 wt.% of the used amount of Compound (1-1), and the mixture was stirred at room temperature for 3 minutes to produce an insulating coating material 1.

### Preparation Example 3 (Preparation of Insulating Coating Material)

An insulating coating material 2 was produced in the same manner as in Preparation Example 2 except that cyclopentanone was used instead of cyclohexanone.

### Example 1

### Pretreatment

Dirt such as dust and oil adhered to a copper wire was removed with an alkaline aqueous solution, then the wire was washed with water, chemically polished with an acidic aqueous solution, and further washed with water, and then water and moisture on the copper surface were removed with alcohol.

### First Immersion

The pretreated copper wire was gently immersed in the insulating coating material 1 produced in Preparation Example 2 in a vertical direction so as not to generate bubbles on the surface, and held for 6 to 8 seconds.

### Primary Drying

The copper wire was pulled up from the insulating coating material and dried at 150°C for 5 minutes under normal pressure.

### Second Immersion

The copper wire after the primary drying was cooled to room temperature, and then immersed again in the insulating coating material 1 for 6 to 8 seconds. A coating film with a thickness of 30 µm was thus formed on the surface of the copper wire.

### Main Drying

The coated copper wire was pulled up from the insulating coating material and dried at 150°C for 5 minutes under normal pressure.

### Firing

The coated copper wire was heated at 230°C for 2 hours under reduced pressure to fire the coating film. An insulated wire 1 in which the surface of the copper wire was covered with the insulating film containing a cured product of Compound (1-1) was thus produced.

### Example 2

An insulated wire 2 was produced in the same manner as in Example 1 except that the insulating coating material 2 was used instead of the insulating coating material 1.

### Evaluation of Insulated Wire

Appearance observation, steady contact evaluation, and insulation performance evaluation were performed on the insulated wires 1 and 2 produced in Examples.

### Appearance Observation

The surface of the insulating film was observed with a CCD camera, and it was confirmed that there was no void or density unevenness in any case.

### Steady Contact Evaluation

A mandrel test was performed. It was confirmed that no crack was generated in a bent portion and the steady contact was excellent in any case.

### Insulation Performance Evaluation

The relative dielectric constant of the insulating film was measured to evaluate the insulation performance. For the measurement of the dielectric constant of the insulating film, a test piece having a width of 1.5 mm was produced by cutting a molded body, and the relative dielectric constant was measured by a cavity resonator perturbation method (in conformity with ASTM D2520). The measurement was performed at a frequency of 10 GHz.

As a result, the relative dielectric constant was 2.60, and it was confirmed that the insulation performance was superior to polyimide and polyamide-imide. The relative dielectric constant of polyimide is 3.34, and the relative dielectric constant of polyamide-imide is greater than 2.7.

As a summary of the above, configurations and variations of the present disclosure are described below.
[1] An insulated wire including a conductor wire and an insulating film covering the conductor wire, the insulating film containing a cured product of a compound represented by Formula (1).
[2] The insulated wire according to [1], wherein a proportion of the cured product of the compound represented by Formula (1) to a total amount of the insulating film is 50 wt.% or greater.
[3] The insulated wire according to [1] or [2], wherein the compound represented by Formula (1) has an exothermic onset temperature of 220°C or higher as determined by DSC measurement under a nitrogen atmosphere at a temperature rise temperature of 20 °C/min.
[4] The insulated wire according to any one of [1] to [3], wherein the insulating film has a thickness of from 10 to 30 µm.
[5] The insulated wire according to any one of [1] to [4], wherein the cured product of the compound represented by Formula (1) has a 5% weight loss temperature of 300°C or higher as measured under a nitrogen atmosphere at a rate of temperature increase of 20 °C/min.
[6] The insulated wire according to any one of [1] to [5], wherein D¹ and D² in Formula (1) are groups including a divalent aromatic hydrocarbon group.
[7] The insulated wire according to any one of [1] to [5], wherein D¹ and D² in Formula (1) are groups including an arylene group having from 6 to 14 carbons.
[8] The insulated wire according to any one of [1] to [5], wherein D¹ and D² in Formula (1) are identical or different, and are each a group selected from groups having structures represented by Formulas (d-1) to (d-4).
[9] The insulated wire according to any one of [1] to [5], wherein D¹ and D² in Formula (1) are each a group represented by Formula (d-1).
[10] The insulated wire according to any one of [1] to [5], wherein D¹ and D² in Formula (1) are each a group in which at least one group selected from the group consisting of a carbonyl group, an ether bond, an ester bond, a carbonate bond, an amide bond, and an imide bond is linked to an arylene group having from 6 to 14 carbons.
[11] The insulated wire according to any one of [1] to [5], wherein D¹ and D² in Formula (1) are groups in which an ether bond is linked to a divalent aromatic hydrocarbon group.
[12] The insulated wire according to any one of [1] to [5], wherein D¹ and D² in Formula (1) are groups in which an ether bond is linked to an arylene group having from 6 to 14 carbons.
[13] The insulated wire according to any one of [1] to [5], wherein an R¹-D¹-moiety and an R²-D²- moiety in Formula (1) are each a group represented by Formula (rd-1'-1) or Formula (rd-1'-2).
[14] The insulated wire according to any one of [1] to [13], where R¹, R² in Formula (1) are each a group selected from groups represented by Formulas (r-1-1) to (r-1-6).
[15] The insulated wire according to any one of [1] to [13], wherein R¹ and R² in Formula (1) are each a group represented by Formula (r-1').
[16] The insulated wire according to any one of [1] to [13], wherein R¹ and R² in Formula (1) are each a group selected from groups represented by Formulas (r-1-1) to (r-1-5).
[17] The insulated wire according to any one of [1] to [13], where R¹ and R² in Formula (1) are each a group selected from groups represented by Formula (r-1-1) or Formula (r-1-5).
[18] The insulated wire according to any one of [1] to [17], wherein L in Formula (1) is a divalent group represented by Formula (L-1-1) or Formula (L-1-2).
[19] The insulated wire according to any one of [1] to [18], wherein the cured product of the compound represented by Formula (1) has a relative dielectric constant of 2.7 or less at 10 GHz.
[20] The insulated wire according to any one of [1] to [19], wherein the insulating film has a relative dielectric constant of 2.70 or less at 10 GHz.
[21] The insulated wire according to any one of [1] to [20], wherein the compound represented by Formula (1) has a number average molecular weight of from 1000 to 15000.
[22] The insulated wire according to any one of [1] to [21], wherein the compound represented by Formula (1) has a weight average molecular weight of from 1000 to 45000.
[23] The insulated wire according to any one of [1] to [22], wherein the compound represented by Formula (1) has a solubility of 1 g or more per 100 g of cyclohexanone at 23°C.
[24] The insulated wire according to any one of [1] to [23], wherein the compound represented by Formula (1) has a solubility of 1 g or more per 100 g of cyclopentanone at 23°C.
[25] A method for producing an insulated wire, the method including:
   applying an insulating coating material containing a compound represented by Formula (1) and a solvent to a conductor wire; and
   heating the insulating coating material to produce the insulated wire described in any one of [1] to [24].
[26] A coil including the insulated wire described in any one of [1] to [24].
[27] A motor including the coil described in [26].
[28] A generator including the coil described in [26].
[29] An electronic or electric device including the coil described in [26].
[30] A cable including the insulated wire described in any one of [1] to [24].
[31] An electronic or electric apparatus including the cable described in [30].

### Industrial Applicability

The insulated wire of the present disclosure includes an insulating film having no void or pinhole but having high insulation properties. Thus, when the insulated wire is used, occurrence of short circuit, ground fault, electric leakage, and the like can be suppressed, and safety is achieved. The insulated wire can be used for a coil, a cable, or the like, for example. The coil including the insulated wire can be suitably used for a motor, a generator, or the like. A cable including the insulated wire can be suitably used as a connecting component in an electronic or electric device.

## Claims

1. An insulated wire comprising:
a conductor wire; and
an insulating film covering the conductor wire,
the insulating film containing a cured product of a compound represented by Formula (1): 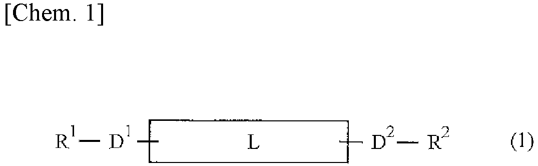
where R¹ and R² each represent a group represented by Formula (r-1): 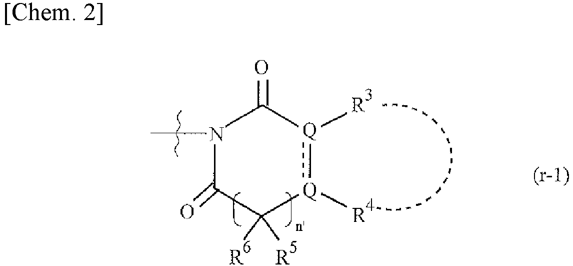 where
Q represents C or CH,
two Q's bond to each other via a single bond or a double bond,
R³ to R⁶ are identical or different, and each represent a hydrogen atom or a hydrocarbon group,
R³ and R⁴ may bond to each other to form a ring,
n' represents an integer of 0 or greater, and
a bond indicated by a wavy line is bonded to D¹ or D²;
D¹ and D² are identical or different, and each represent a single bond or a linking group; and
L represents a divalent group having a repeating unit containing a structure represented by Formula (I) and a structure represented by Formula (II): 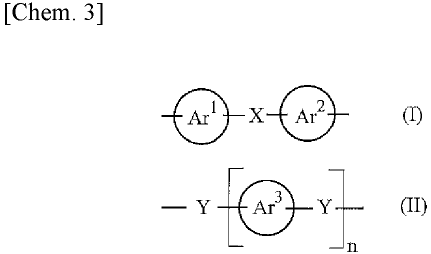
where
Ar¹ to Ar³ are identical or different, and each represent a group in which two hydrogen atoms are removed from a structure of an aromatic ring, or a group in which two hydrogen atoms are removed from a structure containing two or more aromatic rings bonded via a single bond or a linking group;
X represents -CO-, -S-, or -SO₂-;
Y is identical or different, and each represents -S-, -SO₂-, - O-, -CO-, -COO-, or -CONH-; and
n represents an integer of 0 or greater.

2. The insulated wire according to claim 1, wherein D¹ and D² in Formula (1) are identical or different, and each represent a group selected from groups having structures represented by Formulas (d-1) to (d-4):

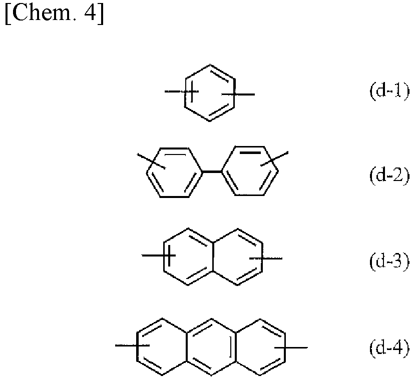

3. The insulated wire according to claim 1 or 2, wherein R¹ and R² in Formula (1) each are a group represented by Formula (r-1'): 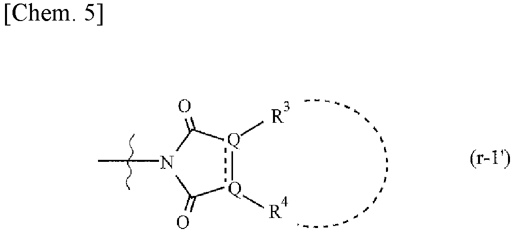 where
Q represents C or CH,
two Q's bond to each other via a single bond or a double bond,
R³ and R⁴ are identical or different, and each represent a hydrogen atom or a hydrocarbon group,
R³ and R⁴ may bond to each other to form a ring, and a bond indicated by a wavy line is bonded to D¹ or D².

4. The insulated wire according to claim 1 or 2, wherein L in Formula (1) is a divalent group represented by Formula (L-1-1) or Formula (L-1-2): 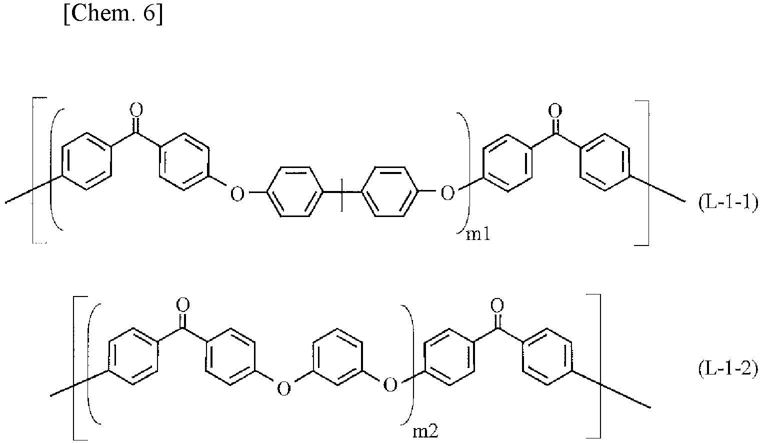 where m1 and m2 each represent a number of 2 to 50.

5. The insulated wire according to claim 1 or 2, wherein a cured product of the compound represented by Formula (1) has a relative dielectric constant of 2.7 or less at 10 GHz.

6. A method for producing an insulated wire, the method comprising:
applying an insulating coating material containing a compound represented by Formula (1) and a solvent to a conductor wire; and
heating the insulating coating material to produce the insulated wire described in claim 1 or 2: 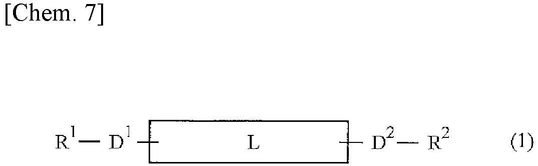
where R¹ and R² each represent a group represented by Formula (r-1): 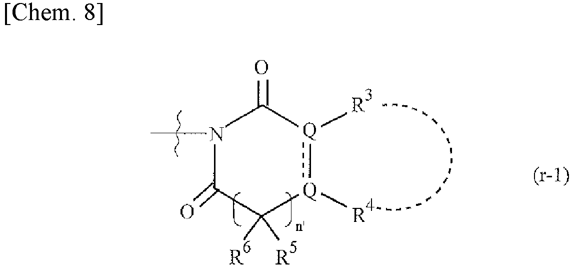 where
Q represents C or CH,
two Q's bond to each other via a single bond or a double bond,
R³ to R⁶ are identical or different, and each represent a hydrogen atom or a hydrocarbon group,
R³ and R⁴ may bond to each other to form a ring,
n' represents an integer of 0 or greater, and
a bond indicated by a wavy line is bonded to D¹ or D²;
D¹ and D² are identical or different, and each represent a single bond or a linking group; and
L represents a divalent group having a repeating unit containing a structure represented by Formula (I) and a structure represented by Formula (II): 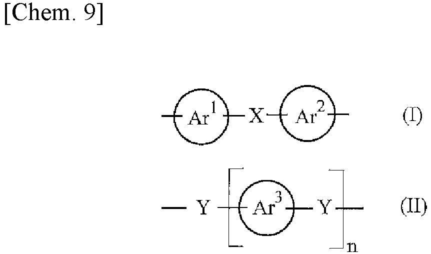
where
Ar¹ to Ar³ are identical or different, and each represent a group in which two hydrogen atoms are removed from a structure of an aromatic ring or a group in which two hydrogen atoms are removed from a structure having two or more aromatic rings bonded via a single bond or a linking group,
X represents -CO-, -S-, or -SO₂-,
Y is identical or different, and each represents -S-, -SO₂-, - O-, -CO-, -COO-, or -CONH-, and
n represents an integer of 0 or greater.

7. A coil comprising the insulated wire according to claim 1 or 2.

8. A motor comprising the coil described in claim 7.

9. A generator comprising the coil described in claim 7.

10. An electronic or electric device comprising the coil described in claim 7.

11. A cable comprising the insulated wire described in claim 1 or 2.

12. An electronic or electric apparatus comprising the cable described in claim 11.
